# EUROPEAN PATENT SPECIFICATION

(11) **EP 2 611 251 B1**
(45) Date of publication and mention of the grant of the patent: **16.09.2015**
(21) Application number: 11786128.6
(22) Date of filing: 03.06.2011
(51) Int. Cl.: H04W 72/10, H04W 72/06

(54) **METHOD AND APPARATUS FOR PROVIDING DIFFERENTIATION SERVICES TO UE**
VERFAHREN UND VORRICHTUNG ZUR BEREITSTELLUNG VON DIFFERENTIERUNGSDIENSTEN FÜR BENUTZERGERÄTE
PROCÉDÉ ET APPAREIL POUR FOURNIR DES SERVICES DIFFÉRENCIÉS À UN UE

(30) Priority: 26.08.2010 CN 201010264488
(43) Date of publication of application: 03.07.2013
(73) Proprietor: Huawei Technologies Co., Ltd., Longgang District Shenzhen, Guangdong 518129 (CN)
(72) Inventor: LV, Wu, Shenzhen Guangdong 518129 (CN); ZHANG, Anan, Shenzhen Guangdong 518129 (CN); GUAN, Shiguo, Shenzhen Guangdong 518129 (CN)
(74) Representative: Epping - Hermann - Fischer
(86) International application number: PCT/CN2011/075305
(87) International publication number: WO 2011/147356

(56) References cited:
- EP-A1- 2 015 513
- WO-A1-2006/071155
- CN-A- 1 835 473
- CN-A- 1 856 159
- CN-A- 1 882 171
- CN-A- 101 951 685
- "3rd Generation Partnership Project; Technical Specification Group Services and System Aspects; Quality of Service (QoS) concept and architecture (Release 9)", 3GPP STANDARD; 3GPP TS 23.107, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 10 June 2010 (2010-06-10), pages 1-41, XP050441549, [retrieved on 2010-06-10]
- GARRIGA B ET AL: "QoS Load Differentiation Application in a UTRAN Live Network", 2009 IEEE 69TH VEHICULAR TECHNOLOGY CONFERENCE; APRIL 26-29, 2009, BARCELONA, SPAIN, IEEE, PISCATAWAY, NJ, USA, 26 April 2009 (2009-04-26), pages 1-8, XP031474768, ISBN: 978-1-4244-2517-4

## Description

### FIELD OF THE INVENTION

The present invention relates to the field of communications technologies, in particular to a method and an apparatus for providing a differentiated service for a UE (User Equipment, user equipment).

### BACKGROUND OF THE INVENTION

In operation of a 3G (3rd-generation, third generation of mobile telecommunications technology) network, with market development and a change of competitive environment, an operator generally subdivides user groups based on an operation strategy and provides different grades of services for user groups with different requirements to increase the operation income and reduce the cost per bit. Related content of quality of service is defined in the 3GPP (Third Generation Partnership Project, third generation partnership project) protocol, where a service priority provides a possibility for a differentiated service solution. In order to assist the operator in improving operation efficiency, 3G network equipment providers in this industry also provide a differentiated service solution.

In the prior art, an implementation method for a differentiated service solution in the 3G network is implementing a differentiated service based on a user class and a service type.

In the process of implementing the present invention, the implementation method for a differentiated service solution in the 3G network has at least the following problems in the prior art: In practical operation of the 3G network, data card users account for a high proportion, and a data card user has a different requirement for 3G service experience from a common mobile phone user. For example, when many data card users perform downloading by using a high-bandwidth service, the data card users will affect service experience of a high-end mobile phone user. This solution cannot solve the problem that the data card users affect service experience of a mobile phone user.

Document WO2006071155A1 discloses a method for switching a packet to a bearer in a mobile telecommunication network, by setting up multiple parallel bearers for bearing the packet across a radio interface; associating the bearers with a bearer priority level of traffic handling; determining a priority level of the packet; mapping the packet priority level to the bearer priority level; switching the packet to one of the bearers based on the mapping; using the bearer priority level to prioritise the access to the radio resources. A further method for switching a packet by setting up multiple parallel bearers without resource reservation; associating each of the bearers with a bearer priority level; mapping a flow of packets to one of the bearer priority levels, when a service is started; switching each packet to one of the multiple bearers based on the mapping; using the bearer priority level to prioritise the access to the radio resources.

Document 3GPP TS 23.107 v9.1.0 provides the framework for Quality of Service within the 3GPP system. The main purpose is to specify the list of attributes applicable to the UMTS Bearer Service and the Radio Access Bearer Service, as well as describe the Quality of Service architecture to be used in the 3GPP system.

Document "QoS Load Differentiation Application in a UTRAN Live Network" (Vehicular Technology Conference, 2009. VTC Spring 2009. IEEE 69^{th}) describes results of a QoS investigation on a real live UTRAN network with a significant number of real users. The results presented show improvements in terms of throughput and delay. The trial led to the identification and confirmation of an "optimum proportion" of "highest clas" users in a network under various traffic conditions initially via an HSPA traffic model then via real traffic profiles in the live network. This exercise has led to the identification and proposal of two new algorithms and are outlined in this paper: Iub congestion control is improved to prioritize users per node B (inter-cell) and a new scheduler algorithm is proposed to take into account the users/services delay depending on their priority.

Document EP2015513 A1 relates to a method for establishing a service in a first frequency in a communication network, wherein the first frequency does not support the service or supports it in a limited way, the method comprises the following steps: determining the service to be established, re-selecting or redirecting to a second frequency that is suitable for the service, so as to carry out the service in the second frequency. The present invention also relates to user equipment and a network apparatus for establishing a service in a first frequency in a communication network, wherein the first frequency does not support the service or supports it in a limited way. According to the present invention, a non-MBMS service may be established in the MBMS dedicated frequency, so as to carry out the non-MBMS service in the normal frequency.

### SUMMARY OF THE INVENTION

Embodiments of the present invention provide a method and an apparatus for providing a differentiated service for a UE, so as to provide a differentiated service for the UE based on the UE type.

A method for providing a differentiated service for a user equipment UE, includes:
obtaining a RAB priority of a UE according to type information, user class information, and service type information of the UE, and preset correspondence between the type information, user class information, and service type information of the UE and a radio access bearer RAB priority of the UE, wherein the type information of the UE comprises: a data card UE or a mobile phone UE; and
providing a service for the UE according to the RAB priority;
wherein the providing a service for the UE according to the RAB priority comprises:
   when a network comprises a first carrier and a second carrier, bearing, by the RNC, a mobile phone UE on the first carrier and bearing a data card UE on the second carrier according to obtained type information of the UEs; and
   allocating resources to the UEs and preferentially ensuring resources required by a UE with a high RAB priority in the first carrier or the second carrier according to RAB priorities corresponding to the UEs, the total number of UEs that request access, and the total available bandwidth resources of a cell or a carrier where the UEs are located, wherein resource allocation in the first carrier and the second carrier does not affect mutually.

An apparatus for providing a differentiated service for to a user equipment UE, including: a radio access bearer RAB priority obtaining module, configured to query preset correspondence between type information, user class information, and service type information of each type of UEs and a radio access bearer RAB priority according to type information, user class information, and service type information of a user equipment UE, so as to obtain the RAB priority of the UE, wherein the type information of the UE comprises: a data card UE or a mobile phone UE; and
a service providing module, configured to provide a service for the UE according to the RAB priority of the UE obtained by the RAB priority obtaining module;
wherein when a network comprises a first carrier and a second carrier, the service providing module comprises:
a second resource allocation unit, configured to bear a mobile phone UE on the first carrier and bear a data card UE on the second carrier according to type information of the UEs obtained by the RAB priority obtaining module; and
allocate resources to the UEs and preferentially ensure resources required by a UE with a high RAB priority in the first carrier or the second carrier according to RAB priorities of the UEs, the total number of UEs that request access, and the total available bandwidth resources of a cell or a carrier where the UEs are located, wherein resource allocation in the first carrier and the second carrier does not affect mutually.

As can be seen from the technical solutions provided by the embodiments of the present invention, in the embodiments of the present invention, a RAB (RADIO ACCESS BEAR, radio access bearer) priority of a UE can be obtained according to type information, user class information, and service type information of the UE; resources such as bandwidth are allocated to the UE based on the RAB priority, a differentiated service is provided for the UE, and a strategy for controlling an integrated priority of the UE is obtained, thereby achieving the optimal operation effect for an operator.

### BRIEF DESCRIPTION OF THE DRAWINGS

To illustrate the technical solutions in the embodiments of the present invention more clearly, the following briefly describes the accompanying drawings required for describing the embodiments. Apparently, the accompanying drawings in the following descriptions merely show some embodiments of the present invention, and persons of ordinary skill in the art can derive other drawings from the accompanying drawings without creative efforts.
FIG. 1 is a processing flowchart of a method for providing a differentiated service for a UE according to an embodiment of the present invention;
FIG. 2 is a processing flowchart of a method for providing a differentiated service for a UE according to another embodiment of the present invention; and
FIG. 3 is a specific structural diagram of an apparatus for providing a differentiated service for a UE according to an embodiment of the present invention.

### DETAILED DESCRIPTION OF THE EMBODIMENTS

To make the objectives, technical solutions, and advantages of the present invention more comprehensible, the following clearly describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

To make the embodiments of the present invention more comprehensible, further explanation and illustration are provided in the following with reference to the accompanying drawings and by using several specific embodiments as examples, and the embodiments are not intended to limit the embodiments of the present invention.

### An embodiment

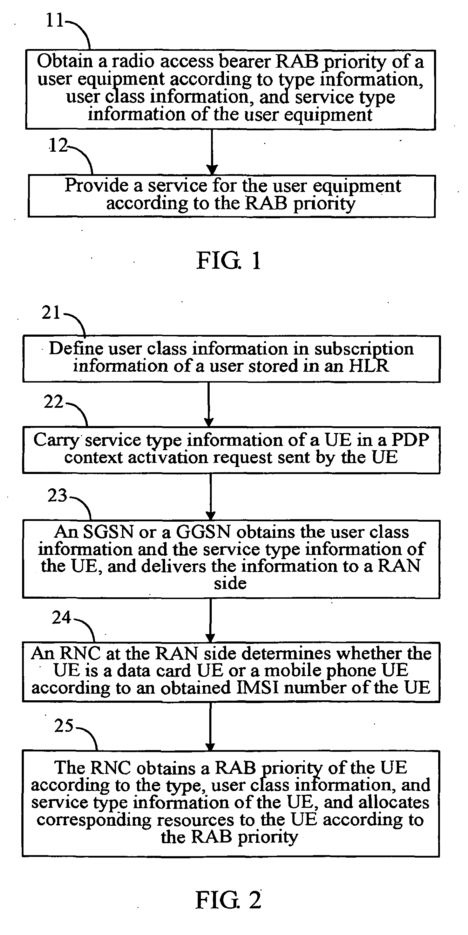

An embodiment of the present invention provides a method for providing a differentiated service for a UE. The process of the method for providing a differentiated service for a UE provided in this embodiment is shown in FIG. 1. The method includes the following steps:
Step 11. Obtain a RAB priority of a UE according to type information, user class information, and service type information of the UE.

The type information of the UE is obtained according to a planning of an IMSI (international mobile subscriber identity, international mobile subscriber identity) number or IMEI (International Mobile Equipment Identity, international mobile equipment identity) number of an operator and an IMSI number or IMEI number of the UE. Types of the UE include a card UE or a mobile phone UE.

The user class information of the UE is obtained from subscription information of users stored in an HLR (Home Location Register, home location register). The service type information of the UE is obtained from a PDP (Packet Data Protocol, packet data protocol) context activation request sent by the UE.

According to the type information, user class information, and service type information of the UE, preset correspondence between the type information, user class information, and service type information of the UE and a radio access bearer RAB priority is queried to obtain the RAB priority of the UE.

Step 12. Provide a service for the UE according to the RAB priority.

When all UEs are borne on a single carrier, an RNC (Radio Network Controller, radio network controller) allocates resources to the UEs and preferentially ensures resources required by a UE with a high RAB priority according to obtained RAB priorities of the UEs, the total number of UEs that request access, and the total available bandwidth resources of a cell where the UEs are located.

Another embodiment of the present invention provides a method for providing a differentiated service for a UE. The process of the method for providing a differentiated service for a UE is shown in FIG. 2, including the following processing steps:
Step 21. Define user class information in subscription information of a user stored in an HLR.

The user subscribes to the HLR and the HLR stores subscription information of the user. The user class information is defined in the subscription information. According to different tariffs, users are generally classified into three types, namely, a high-end user, a common user, and a low-end user, that is, three general user classes gold, silver, and copper.

The user is associated with a card number.

Step 22. Carry service type information of a UE in a PDP context activation request sent by the UE.

In the process of establishing a communication connection between a UE and a 3G network, the UE initiates a service request, and the 3G network receives a PDP context activation request sent by the UE, where the request carries service type information of the UE, and service types generally include four service types, namely, a session service, a streaming service, an interactive service, and a background service. The four service types are sorted by importance as follows: session service > streaming service > interactive service > background service.

Step 23. An SGSN (Serving GPRS Support Node, serving GPRS support node) or a GGSN (Gateway GPRS Support Node, gateway GPRS support node) obtains the user class information and the service type information of the UE, and delivers the information to a RAN (Radio Access Network, radio access network) side.

The SGSN or the GGSN reads the subscription information of the user from the HLR and obtains the user class information included in the subscription information. The SGSN or the GGSN also obtains the service type information of the UE carried in the PDP context activation request sent by the UE.

Then, the SGSN or the GGSN delivers the obtained user class information and service type information of the UE to the RAN side through an Iu interface (an interface between a core network and an RNC).

Step 24. An RNC at the RAN side determines whether the type of the UE is a data card UE or a mobile phone UE according to an obtained IMSI number or IMEI number of the UE.

The RNC at the RAN side sends a request message for obtaining an IMSI number or IMEI number of the UE, and the core network returns a response message that carries the IMSI number or IMEI number of the UE to the RNC.

In practice, a network operator has particular planning for allocating IMSI or IMEI number segments, it is clearly specified that which IMSI or IMEI number segments are allocated to a mobile phone UE and which IMSI or IMEI number segments are allocated to a data card UE. The RNC obtains an IMSI or IMEI number segment of the UE in the response message and determines whether the type of the UE is a data card UE or a mobile phone UE according to the IMSI or IMEI number segment and the planning of IMSI or IMEI number segments by the operator.

For example, the structure of an IMSI number segment of a national 3G network operator is as follows: MCC (Mobile Country Code, mobile country code)+MNC (Mobile Network Code, mobile network code)+MSIN (Mobile Station Identification Number, mobile station identification number). The MCC uniquely identifies the country that a mobile user belongs to, the MCC of China is 460; the MNC identifies a mobile network that a mobile user belongs to, for example, the MNC of a national 3G operator is 01; and the MSIN is in the format of XXXX+A+YYYYY, where A stands for the number 0, 9, 2, 7, 3, 4, and 6. The planning of IMSI number segments by the 3G network operator may be shown in Table 1.

**Table 1**

| IMSI Number Segment | User Number | Remarks |
|---|---|---|
| 46001XXXX0YYYYY | 130 | Mobile phone number segment |
| 46001XXXX9YYYYY | 131 | Mobile phone number segment |
| 46001XXXX2YYYYY | 132 | Mobile phone number segment |
| 46001XXXX7YYYYY | 145 | Data card number segment |
| 46001XXXX3YYYYY | 156 | Data card number segment |
| 46001XXXX4YYYYY | 155 | Mobile phone number segment |
| 46001XXXX6YYYYY | 186 | Mobile phone number segment |

Step 25. The RNC obtains a RAB priority of the UE according to the type information, user class information, and service type information of the UE, and allocates corresponding resources to the UE according to the RAB priority.

In practice, the correspondence between type information, user class information, and service type information of each type of UEs and a RAB priority may be preset. The correspondence includes one or a combination of the following:
A RAB priority corresponding to a data card UE is higher than a RAB priority corresponding to a mobile phone UE;
   a RAB priority corresponding to a UE with a high user class is higher than a RAB priority corresponding to a UE with a low user class; and
RAB priorities corresponding to a UE with a session service, a UE with a streaming media service, a UE with an interactive service, and a UE with a background service are in descending order.

In practice, the value of the RAB priority corresponding to a UE with a high RAB priority may be set to be greater or smaller than the value of the RAB priority corresponding to a UE with a low RAB priority.

For example, when the value of the RAB priority corresponding to a UE with a high RAB priority is set to be smaller than the value of the RAB priority corresponding to a UE with a low RAB priority, the correspondence provided in this embodiment may be shown in Table 2:

**Table 2**

| UE Type Information | User Class Information | Service Type Information | Value of a RAB Priority |
|---|---|---|---|
| Mobile phone user | High-end user | Session | 1 |
| Mobile phone user | High-end user | Streaming media | 2 |
| Mobile phone user | High-end user | Interactive | 3 |
| Mobile phone user | High-end user | Background | 3 |
| Mobile phone user | Common user | Session | 4 |
| Mobile phone user | Common user | Streaming media | 5 |
| Mobile phone user | Low-end user | Session | 6 |
| Data card user | High-end user | Session | 6 |
| Data card user | Common user | Session | 6 |
| Data card user | Low-end user | Session | 6 |
| Mobile phone user | Common user | Interactive | 7 |
| Mobile phone user | Common user | Background | 7 |
| Mobile phone user | Low-end user | Streaming media | 8 |
| Mobile phone user | Low-end user | Interactive | 9 |
| Mobile phone user | Low-end user | Background | 9 |
| Data card user | High-end user | Streaming media | 10 |
| Data card user | High-end user | Interactive | 11 |
| Data card user | High-end user | Background | 12 |
| Data card user | Common user | Streaming media | 13 |
| Data card user | Common user | Interactive | 14 |
| Data card user | Common user | Background | 14 |
| Data card user | Low-end user | Streaming media | 14 |
| Data card user | Low-end user | Interactive | 15 |
| Data card user | Low-end user | Background | 15 |

The RNC queries the correspondence to obtain the RAB priority of the UE according to the obtained type information (a data card UE or a mobile phone UE) of the UE, and the user class information and the service type information of the UE that are sent by the SGSN or the GGSN.

Then, when all UEs are borne on a single carrier, the RNC allocates corresponding resources such as bandwidth to the UEs according to obtained RAB priorities of the UEs, the total number of UEs that request access, the total available bandwidth resources of a cell where the UEs are located, and a specific bandwidth allocation strategy. Moreover, when the resources are allocated, resources such as bandwidth required by a UE with a higher RAB priority is preferentially ensured, thereby providing differentiated services for different UEs.

For example, at present, there are two types of UEs that perform access, one is a UE of class A, the other is a UE of class B. Information about the UE of class A obtained in the RNC is that the type of the UE is a data card UE, the user class of the UE is a high-end user, and the type of a service requested by the UE is streaming media; information about the UE of class B obtained in the RNC is that the type of the UE is a mobile phone UE, the user class of the UE is a common user, and the type of a service requested by the UE is session. When performing integrated priority processing, the RNC allocates RAB priority values to the UE of class A and the UE of class B by querying Table 2. The priority value of the UE of class A is 10, and that of the UE of class B is 4. In this situation, the RAB priority value of the UE of class B is smaller than that of the UE of class A, that is, the RAB priority of the UE of class B is higher than that of the UE of class A. When resources are allocated and utilized, bandwidth required by the UE of class B is preferentially ensured.

Assume that bandwidth required by the UE of class A for meeting a service request is 1.8 Mbps, bandwidth required by the UE of class B for meeting a service request is 0.2 Mbps, and the total accessible bandwidth resource of a system is 5 Mbps. Meanwhile, assume that 20 UEs of class B and two UEs of class A exist in an access system, the bandwidth resource required by the 20 UEs of class B is 4 Mbps and that required by the two UEs of class A is 3.6 Mbps, and therefore the total required bandwidth resource is 7.6 Mbps. According to the allocation principle that a UE (a UE of class B) with a higher RAB priority is preferentially ensured in this embodiment of the present invention, 4 Mbps is allocated to the 20 UEs of class B, that is, each of the UEs is allocated with 0.2 Mbps for meeting the bandwidth requirement. The remaining 1 Mbps is allocated to the two UEs of class A, that is, each UE of class A is allocated with 0.5 Mbps. In this case, the bandwidth requirement cannot be met for a UE with a low priority.

Meanwhile, assume that five users of class B and two users of class A exist in the access system. The bandwidth resource required by the five UEs of class B is 1 Mbps and that required by the two UEs of class A is 3.6 Mbps, and therefore the total required bandwidth resource is 4.6 Mbps. Therefore, when the system allocates resources, the bandwidth requirement can be met for access requests of all the seven UEs.

In this embodiment, it is achieved that when a 3G network provides a differentiated class service for a UE, three factors, namely, type information, user class information, and service type information of the UE are comprehensively considered to obtain RAB priorities corresponding to type information, user class information, and service type information of different types of UEs and a strategy for controlling an integrated priority of the UE. It is equivalent to that in the prior art, a service is provided for a UE based on only two factors, namely, user class and service type, whereas in this embodiment, a service is provided for a UE based on a value of the RAB priority, which allows an operator to provide corresponding differentiated services for different UEs in a more comprehensive and detailed manner.

In this embodiment, resources such as bandwidth required by a UE with a high RAB priority is preferentially ensured, which allows an operator to implement an optimal differentiated service solution.

In the situation that 3G network coverage is dual carrier networking and when the network includes a first carrier and a second carrier, the RNC may allocate different types of UEs onto different carriers, for example, bearing a mobile phone UE on the first carrier and bearing a data card UE on the second carrier.

In practice, the correspondence between type information, user class information, and service type information of each type of UEs and a RAB priority may be preset on the first carrier and the second carrier. On the first carrier, the RNC queries the correspondence to obtain the RAB priority of the UE according to the type (for example, mobile phone UE), user class information, and service type information of the UE. On the second carrier, the RNC queries the correspondence to obtain the RAB priority of the UE according to the type (for example, data card UE), user class information, and service type information of the UE.

The first carrier and the second carrier are independent. After UEs are allocated onto the first carrier or the second carrier, in the first carrier or the second carrier, resources such as bandwidth are allocated to the UEs according to RAB priorities of the UEs, the total number of UEs that request access, the total available bandwidth resources of a cell or a carrier where the UEs are located, and a specific bandwidth allocation strategy. Resources such as bandwidth required by a UE with a higher RAB priority are preferentially ensured, and resource allocation of the two carriers does not affect mutually.

When the cell where the UEs are located is a cell in a WCDMA (Wideband Code Division Multiple Access, wideband code division multiple access) system, because one cell has only one carrier, corresponding resources such as bandwidth are allocated to the UEs according to the RAB priorities of the UEs, the total number of UEs that request access, and the total available bandwidth resources of the cell where the UEs are located.

When the cell where the UEs are located is a cell in a TD-SCDMA (Time Division-Synchronous Code Division Multiple Access, time division-synchronous code division multiple access) system, because one cell has multiple carriers, corresponding resources such as bandwidth are allocated to the UEs according to the RAB priorities of the UEs, the total number of UEs that request access, and the total available bandwidth resources of a carrier where the UEs are located.

After a mobile phone UE is borne on the first carrier and a data card UE is borne on the second carrier, a mobility management strategy for the mobile phone UE and the data card UE includes:
1: The data card UE in the second carrier may perform an intra-frequency bidirectional handover, and the mobile phone UE in the first carrier may perform an intra-frequency bidirectional handover. For example, after the mobile phone UE is borne on the first carrier with a frequency of F1 and the data card UE is borne on the second carrier with a frequency of F2, the mobile phone UE may perform a handover between different cells on the first carrier with the frequency of F1, and the data card UE may perform a handover between different cells on the second carrier with the frequency of F2.
2: A relationship of a unidirectional inter-frequency neighboring cell is configured between the second carrier and the first carrier. When the first carrier is congested, a load transfer may be performed from the first carrier to the second carrier; when the second carrier is congested, a load transfer cannot be performed from the second carrier to the first carrier. For example, after the mobile phone UE is borne on the first carrier with the frequency of F1 and the data card UE is borne on the second carrier with the frequency of F2, when the first carrier bears many mobile phone UEs and the RNC determines that the load on the first carrier with the frequency F1 exceeds a preset threshold, a load transfer may be performed from the first carrier to the second carrier, that is, transferring part of mobile phone UEs from the first carrier to the second carrier. When there are many data card UEs on the second carrier and the RNC determines that the load on the second carrier with the frequency of F2 exceeds a preset threshold, a load transfer cannot be performed from the second carrier to the first carrier.
3. In the case of multicarrier, among UEs waiting for access, if the number of mobile phone UEs is greater than the number of data card UEs, and the difference between the number of mobile phone UEs and the number of data card UEs is greater than a preset threshold, a third carrier bears only mobile phone UEs; or
   among UEs waiting for access, if the number of data card UEs is greater than the number of mobile phone UEs, and the difference between the number of data card UEs and the number of mobile phone UEs is greater than a preset threshold, the third carrier bears only a data card UE; or
   among UEs waiting for access, if the difference between the number of mobile phone UEs and that of data card UEs is smaller than a preset threshold, the third carrier bears both a mobile phone UE and a data card UE.

In this embodiment, it is achieved that data card UEs are borne on a single carrier in the case of dual carrier or multicarrier networking, so that high-bandwidth service downloads of the data card UEs have no impact on service experience of high-end mobile phone user UEs on another carrier.

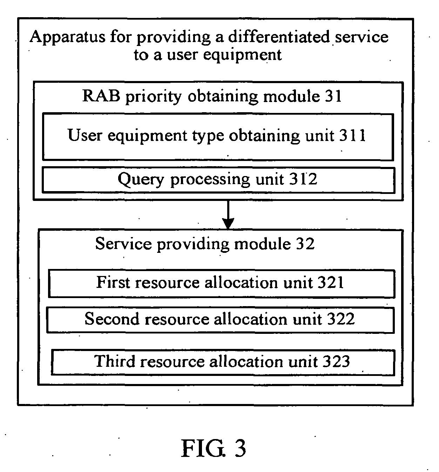

An embodiment of the present invention further provides an apparatus for providing a differentiated service for a UE, its specific structure is shown in FIG. 3, including:
a RAB priority obtaining module 31, configured to query preset correspondence between type information, user class information, and service type information of each type of UEs and a RAB priority according to type information, user class information, and service type information of a UE, so as to obtain a RAB priority of the UE; and
a service providing module 32, configured to provide a service for the UE according to the RAB priority of the UE obtained by the RAB priority obtaining module.

The RAB priority obtaining module 31 specifically includes:
a UE type obtaining unit 311, configured to obtain an IMSI number or IMEI number or the UE and obtain the type information of the UE according to a planning of the IMSI number or IMEI number of an operator and the IMSI number or IMEI number of the UE, where types of the UE include a data card UE or a mobile phone UE; and
a query processing unit 312, configured to query preset correspondence between type information, user class information, and service type information of a UE and a RAB priority according to the type information, user class information, and service type information of the UE obtained by the UE type obtaining unit, so as to obtain the RAB priority of the UE. The correspondence includes one or a combination of the following:
   The value of a RAB priority corresponding to a data card UE is higher than the value of a RAB priority corresponding to a mobile phone UE.

The value of a RAB priority corresponding to a UE with a high user class is higher than the value of a RAB priority corresponding to a UE with a low user class; and
RAB priorities corresponding to a UE with a session service, a UE with a streaming media service, a UE with an interactive service, and a UE with a background service are in descending order.

In practice, the value of the RAB priority corresponding to a UE with a high RAB priority may be set to be greater or smaller than the value of the RAB priority corresponding to a UE with a low RAB priority.

For example, when the value of the RAB priority value corresponding to a UE with a high RAB priority is set to be smaller than the value of the RAB priority corresponding to a UE with a low RAB priority, the preset correspondence between type information, user class information, and service type information of a UE and a RAB priority may be shown in Table 2.

When all UEs are borne on a single carrier, the service providing module 32 may include:
a first resource allocation unit 321, configured to allocate resources to the UEs and preferentially ensure resources required by a UE with a high RAB priority according to RAB priorities of the UEs obtained by the RAB priority obtaining module, the total number of UEs that request access, and the total available bandwidth resources of a cell where the UEs are located; or
when the network includes a first carrier and a second carrier, the service providing module 32 may include:
   a second resource allocation unit 322, configured to bear a mobile phone UE on the first carrier and bear a data card UE on the second carrier according to type information of the UEs obtained by the RAB priority obtaining module; and
   allocate resources to the UEs and preferentially ensure resources required by a UE with a high RAB priority in the first carrier or the second carrier according to RAB priorities corresponding to the UEs, the total number of UEs that request access, and the total available bandwidth resources of a cell or a carrier where the UEs are located. Resource allocation for UEs on the first carrier and on the second carrier does not affect mutually.

When the cell where the UEs are located is a cell in a WCDMA system, as one cell has only one carrier, corresponding resources such as bandwidth are allocated to the UEs according to the RAB priorities of the UEs, the total number of UEs that request access, and the total available bandwidth resources of the cell where the UEs are located.

When the cell where the UEs are located is a cell in a TD-SCDMA system, as one cell has multiple carriers, corresponding resources such as bandwidth are allocated to the UEs according to the RAB priorities of the UEs, the total number of UEs that request access, and the total available bandwidth resources of the carrier where the UEs are located.

For example, a mobile phone UE is borne on the first carrier with a frequency of F1 and a data card UE is borne on the second carrier with a frequency of F2, a load transfer can be performed between two data card UEs and two mobile phone UEs.

When the first carrier with the frequency of F1 is congested, that is, the first carrier bears many mobile phone UEs, a load transfer may be performed from F1 to F2, that is, transferring part of mobile phone UEs from the first carrier to the second carrier. When the second carrier with the frequency of F2 is congested, a load transfer cannot be performed from F2 to F1.

When the network includes multiple carriers, the service providing module 32 may include:
a third resource allocation unit 323, configured to bear a mobile phone UE by using a third carrier when the number of mobile phone UEs is greater than the number of the data card UEs and the difference between the number of mobile phone UEs and the number of data card UEs is greater than a preset threshold; or
bear a mobile phone UE by using the third carrier in the case of multicarrier and when the number of data card UEs is greater than the number of the mobile phone UEs and the difference between the number of data card UEs and the number of mobile phone UEs is greater than a preset threshold; or
bear both a mobile phone UE and a data card UE by using the third carrier in the case of multicarrier and when the difference between the number of mobile phone UEs and that of data card UEs is smaller than a preset threshold.

The foregoing apparatus for providing a differentiated service for a UE may be an RNC.

Persons of ordinary skill in the art should understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Random Access Memory, RAM).

In conclusion, in the embodiments of the present invention, a RAB priority of a UE can be obtained according to type information, user class information, and service type information of the UE; resources such as bandwidth are allocated to the UE based on the RAB priority, a differentiated service is provided for the UE, and a strategy for controlling an integrated priority of the UE is obtained, thereby achieving the optimal operation effect for an operator.

In the embodiments of the present invention, it is achieved that in the case of dual carrier or multicarrier networking, data card users are borne on a single carrier, so that high-bandwidth service downloads of the data card users have no impact on service experience of high-end mobile phone users on another carrier. In this way, the impact of data deluge caused by data card users on a high-end mobile phone user on the network in an operation process of a 3G network is effectively resolved. Service experience of a mobile phone user with a high priority can be ensured while a data card user base can be greatly expanded.

In the embodiments of the present invention, the factor of terminal type is considered for priority processing, which facilitate an operator in more refined operation, thereby maximizing the revenue for the operator.

The foregoing descriptions are merely exemplary embodiments of the present invention, but not intended to limit the present invention. Any variation or replacement made by persons skilled in the art without departing from the technical scope disclosed by the present invention shall fall within the protection scope of the present invention. Therefore, the protection scope of the present invention shall be subject to the appended claims.

## Claims

1. A method for providing a differentiated service for a user equipment, UE, comprising:
Obtaining (11) a RAB priority of a UE according to type information, user class information, and service type information of the UE, and preset correspondence between the type information, user class information, and service type information of the UE and a radio access bearer, RAB, priority of the UE, wherein the type information of the UE comprises: a data card UE or a mobile phone UE; and
Providing (12) a service for the UE according to the RAB priority;
wherein the providing a service for the UE according to the RAB priority comprises:
when a network comprises a first carrier and a second carrier, bearing, by the RNC, a mobile phone UE on the first carrier and bearing a data card UE on the second carrier according to obtained type information of the UEs; and
allocating resources to the UEs and preferentially ensuring resources required by a UE with a high RAB priority in the first carrier or the second carrier according to RAB priorities corresponding to the UEs, the total number of UEs that request access, and the total available bandwidth resources of a cell or a carrier where the UEs are located, wherein resource allocation in the first carrier and the second carrier does not affect mutually.

2. The method for providing a differentiated service for a UE according to claim 1, further comprising:
obtaining an international mobile subscriber identity, IMSI, number or international mobile equipment identity, IMEI, number of the UE; and
obtaining the type information of the UE according to a planning of the IMSI number and the IMSI number of the UE or a planning of the IMEI number and the IMEI number of the UE.

3. The method for providing a differentiated service for a UE according to claim 1 or 2, wherein the preset correspondence between the type information, user class information, and service type information of the UE and the radio access bearer RAB priority of the UE comprises one or a combination of the following:
a RAB priority corresponding to a data card UE is higher than a RAB priority corresponding to a mobile phone UE;
a RAB priority corresponding to a UE with a high user class is higher than a RAB priority corresponding to a UE with a low user class; and
RAB priorities corresponding to a UE with a session service, a UE with a streaming media service, a UE with an interactive service, and a UE with a background service are in descending order.

4. The method for providing a differentiated service for a UE according to claim 1, wherein the providing a service for the UE according to the RAB priority further comprises:
the mobile phone UE is borne on the first carrier and the data card UE is borne on the second carrier; and
when the first carrier is congested, performing a load transfer from the first carrier to the second carrier.

5. The method for providing a differentiated service for a UE according to claim 1, wherein the providing a service for the UE according to the RAB priority further comprises:
in the case of multicarrier, when the number of mobile phone UEs is greater than the number of data card UEs, and the difference between the number of mobile phone UEs and the number of data card UEs is greater than a preset threshold, bearing, by a third carrier, a mobile phone UE; or
in the case of multicarrier, when the number of data card UEs is greater than the number of mobile phone UEs, and the difference between the number of data card UEs and the number of mobile phone UEs is greater than a preset threshold, bearing, by the third carrier, a mobile phone UE; or
in the case of multicarrier, when the difference between the number of mobile phone UEs and the number of data card UEs is smaller than a preset threshold, bearing, by the third carrier, both a mobile phone UE and a data card UE.

6. An apparatus for providing a differentiated service for a user equipment, UE, comprising:
a radio access bearer, RAB, priority obtaining module (31) configured to obtain a RAB priority of the UE according to type information, user class information, and service type information of the UE and preset correspondence between the type information, user class information, and service type information of the UE and a radio access bearer RAB priority, wherein the type information of the UE comprises: a data card UE or a mobile phone UE; and
a service providing module (32) configured to provide a service for the UE according to the RAB priority of the UE obtained by the RAB priority obtaining module;
wherein when a network comprises a first carrier and a second carrier, the service providing module comprises:
a second resource allocation unit (322) configured to bear a mobile phone UE on the first carrier and bear a data card UE on the second carrier according to type information of the UEs obtained by the RAB priority obtaining module; and
allocate resources to the UEs and preferentially ensure resources required by a UE with a high RAB priority in the first carrier or the second carrier according to RAB priorities of the UEs, the total number of UEs that request access, and the total available bandwidth resources of a cell or a carrier where the UEs are located, wherein resource allocation in the first carrier and the second carrier does not affect mutually.

7. The apparatus for providing a differentiated service for a UE according to claim 6, wherein the RAB priority obtaining module comprises:
a UE type obtaining unit (311) configured to obtain an international mobile subscriber identity, IMSI, number or international mobile equipment identity, IMEI, number of the UE, and obtain the type information of the UE according to a planning of the IMSI number of an operator and the IMSI number of the UE or a planning of the IMEI number of an operator and the IMEI number of the UE; and
a query processing unit (312) configured to query preset correspondence between type information, user class information, and service type information of a UE and a RAB priority according to the type information, user class information, and service type information of the UE obtained by the UE type obtaining unit, so as to obtain the RAB priority of the UE, wherein the correspondence comprises one or a combination of the following:
a RAB priority corresponding to a data card UE is higher than a RAB priority corresponding to a mobile phone UE;
a RAB priority corresponding to a UE with a high user class is higher than a RAB priority corresponding to a UE with a low user class; and
RAB priorities corresponding to a UE with a session service, a UE with a streaming media service, a UE with an interactive service, and a UE with a background service are in descending order.

8. The apparatus for providing a differentiated service for a UE according to claim 6, wherein when the network further comprises a third carrier, the service providing module comprises:
a third resource allocation unit (323) configured to bear a mobile phone UE by using a third carrier when the number of mobile phone UEs is greater than the number of the data card UEs and the difference between the number of mobile phone UEs and the number of data card UEs is greater than a preset threshold; or
bear a mobile phone UE by using the third carrier when the number of data card UEs is greater than the number of the mobile phone UEs and the difference between the number of data card UEs and the number of mobile phone UEs is greater than a preset threshold; or
bear both a mobile phone UE and a data card UE by using the third carrier in the case of multicarrier and when the difference between the number of mobile phone UEs and that of data card UEs is smaller than a preset threshold.

## Patentansprüche

1. Verfahren zum Bereitstellen eines differenzierten Dienstes für ein Benutzerendgerät (user equipment, UE), das die folgenden Schritte aufweist:
Beschaffen (11) einer RAB-Priorität eines UE gemäß Typ-Informationen, Benutzerklassen-Informationen und Diensttyp-Informationen des UE, und einer voreingestellten Entsprechung zwischen den Typ-Informationen, Benutzerklassen-Informationen und Diensttyp-Informationen des UE und einer "Radio Access Bearer"- (RAB)-Priorität des UE, wobei die Typ-Informationen des UE umfassen: ein Datenkarten-UE oder ein Mobiltelefon-UE; und
Bereitstellen (12) eines Dienstes für das UE gemäß der RAB-Priorität;
wobei das Bereitstellen eines Dienstes für das UE gemäß der RAB-Priorität aufweist:
wenn ein Netzwerk einen ersten Träger und einen zweiten Träger aufweist, Übermitteln durch den RNC eines Mobiltelefon-UE auf dem ersten Träger und Übermitteln eines Datenkarten-UE auf dem zweiten Träger gemäß der beschafften Typ-Informationen der UEs; und
Zuweisen von Ressourcen zu den UEs und vorzugsweise Sicherstellen von Ressourcen, die durch ein UE mit einer hohen RAB-Priorität benötigt werden, im ersten Träger oder im zweiten Träger gemäß RAB-Prioritäten, die den UEs entsprechen, der Gesamtzahl der UEs, die einen Zugang anfordern, und der gesamten verfügbaren Bandbreiten-Ressourcen einer Zelle oder eines Trägers, wo sich die UEs befinden, wobei sich die Ressourcenzuweisung im ersten Träger und im zweiten Träger nicht gegenseitig beeinflusst.

2. Verfahren zum Bereitstellen eines differenzierten Dienstes für ein UE nach Anspruch 1, das ferner aufweist:
Beschaffen einer "International Mobile Subscriber Identity"- (IMSI)-Nummer oder "International Mobile Equipment Identity"- (IMEI)-Nummer des UE; und
Beschaffen der Typ-Informationen des UE gemäß einer Planung der IMSI-Nummer und der IMSI-Nummer des UE oder einer Planung der IMEI-Nummer und der IMEI-Nummer des UE.

3. Verfahren zum Bereitstellen eines differenzierten Dienstes für ein UE nach Anspruch 1 oder 2, wobei die voreingestellte Entsprechung zwischen den Typ-Informationen, Benutzerklassen-Informationen und Diensttyp-Informationen des UE und der "Radio Access Bearer"- (RAB)-Priorität des UE eines oder eine Kombination des Folgenden aufweist:
eine RAB-Priorität, die einem Datenkarten-UE entspricht, ist höher als eine RAB-Priorität, die einem Mobiltelefon-UE entspricht;
eine RAB-Priorität, die einem UE mit einer hohen Benutzerklasse entspricht, ist höher als eine RAB-Priorität, die einem UE mit einer niedrigen Benutzerklasse entspricht; und
RAB-Prioritäten, die einem UE mit einem Sitzungsdienst, einem UE mit einem Streaming-Mediendienst, einem UE mit einem interaktiven Dienst, und einem UE mit einem Hintergrund-Dienst entsprechen, liegen in einer absteigenden Reihenfolge vor.

4. Verfahren zum Bereitstellen eines differenzierten Dienstes für ein UE nach Anspruch 1, wobei das Bereitstellen eines Dienstes für das UE gemäß der RAB-Priorität ferner aufweist:
das Mobiltelefon-UE wird auf dem ersten Träger übermittelt und das Datenkarten-UE wird auf dem zweiten Träger übermittelt; und
wenn der erste Träger überfüllt ist, Durchführen einer Lastübertragung vom ersten Träger zum zweiten Träger.

5. Verfahren zum Bereitstellen eines differenzierten Dienstes für ein UE nach Anspruch 1, wobei das Bereitstellen eines Dienstes für das UE gemäß der RAB-Priorität ferner aufweist:
im Fall eines Mehrfachträgers, wenn die Anzahl der Mobiltelefon-UEs größer als die Anzahl der Datenkarten-UEs ist und die Differenz zwischen der Anzahl der Mobiltelefon-UEs und der Anzahl der Datenkarten-UEs größer als ein voreingestellter Schwellenwert ist, Übermitteln eines Mobiltelefon-UE durch einen dritten Träger; oder
im Fall eines Mehrfachträgers, wenn die Anzahl der Datenkarten-UEs größer als die Anzahl der Mobiltelefon-UEs ist und die Differenz zwischen der Anzahl der Datenkarten-UEs und der Anzahl der Mobiltelefon-UEs größer als ein voreingestellter Schwellenwert ist, Übermitteln eines Mobiltelefon-UE durch den dritten Träger; oder
im Fall eines Mehrfachträgers, wenn die Differenz zwischen der Anzahl der Mobiltelefon-UEs und der Anzahl der Datenkarten-UEs kleiner als ein voreingestellter Schwellenwert ist, Übermitteln sowohl eines Mobiltelefon-UE als auch eines Datenkarten-UE durch den dritten Träger.

6. Vorrichtung zur Bereitstellung eines differenzierten Dienstes für ein Benutzerendgerät (UE), die Folgendes aufweist:
ein "Radio Access Bearer"- (RAB)-Priorität-Beschaffungsmodul (31), das konfiguriert ist, eine RAB-Priorität des UE gemäß Typ-Informationen, Benutzerklassen-Informationen und Diensttyp-Informationen des UE und einer voreingestellten Entsprechung zwischen den Typ-Informationen, Benutzerklassen-Informationen und Diensttyp-Informationen des UE und einer "Radio Access Bearer"- (RAB)-Priorität zu beschaffen, wobei die Typ-Informationen des UE umfassen: ein Datenkarten-UE oder ein Mobiltelefon-UE; und
ein Dienst-Bereitstellungsmodul (32), das konfiguriert ist, einen Dienst für das UE gemäß der RAB-Priorität des UE bereitzustellen, die durch das RAB-Priorität-Beschaffungsmodul beschafft wird;
wobei wenn ein Netzwerk einen ersten Träger und einen zweiten Träger aufweist, das Dienst-Bereitstellungsmodul aufweist:
eine zweite Ressourcen-Zuweisungseinheit (322), die konfiguriert ist, ein Mobiltelefon-UE auf dem ersten Träger zu übermitteln und ein Datenkarten-UE auf dem zweiten Träger gemäß Typ-Informationen der UEs zu übermitteln, die durch das RAB-Priorität-Beschaffungsmodul beschafft werden; und
den UEs Ressourcen zuzuweisen und vorzugsweise Ressourcen, die durch ein UE mit einer hohen RAB-Priorität benötigt werden, im ersten Träger oder im zweiten Träger gemäß RAB-Prioritäten der UEs, der Gesamtzahl der UEs, die einen Zugang anfordern, und der gesamten verfügbaren Bandbreiten-Ressourcen einer Zelle oder eines Trägers sicherzustellen, wo sich die UEs befinden, wobei sich die Ressourcenzuweisung im ersten Träger und im zweiten Träger nicht gegenseitig beeinflusst.

7. Vorrichtung zum Bereitstellen eines differenzierten Dienstes für ein UE nach Anspruch 6, wobei das RAB-Priorität-Beschaffungsmodul aufweist:
eine UE-Typ-Beschaffungseinheit (311), die konfiguriert ist, eine "International Mobile Subscriber Identity"- (IMSI)-Nummer oder eine "International Mobile Equipment Identity"- (IMEI)-Nummer des UE zu beschaffen, und die Typ-Informationen des UE gemäß einer Planung der IMSI-Nummer eines Betreibers und der IMSI-Nummer des UE oder einer Planung der IMEI-Nummer eines Betreibers und der IMEI-Nummer des UE zu beschaffen; und
eine Abfrageverarbeitungseinheit (312), die konfiguriert ist, eine voreingestellte Entsprechung zwischen Typ-Informationen, Benutzerklassen-Informationen und Diensttyp-Informationen eines UE und eine RAB-Priorität gemäß der Typ-Informationen, Benutzerklassen-Informationen und Diensttyp-Informationen des UE abzufragen, die durch die UE-Typ-Beschaffungseinheit beschafft werden, um die RAB-Priorität des UE zu beschaffen,
wobei die Entsprechung eines oder eine Kombination des Folgenden aufweist:
eine RAB-Priorität, die einem Datenkarten-UE entspricht, ist höher als eine RAB-Priorität, die einem Mobiltelefon-UE entspricht;
eine RAB-Priorität, die einem UE mit einer hohen Benutzerklasse entspricht, ist höher als eine RAB-Priorität, die einem UE mit einer niedrigen Benutzerklasse entspricht; und RAB-Prioritäten, die einem UE mit einem Sitzungsdienst, einem UE mit einem Streaming-Mediendienst, einem UE mit einem interaktiven Dienst, und einem UE mit einem Hintergrund-Dienst entsprechen, liegen in einer absteigenden Reihenfolge vor.

8. Vorrichtung zum Bereitstellen eines differenzierten Dienstes für ein UE nach Anspruch 6, wobei wenn das Netzwerk ferner einen dritten Träger aufweist, das Dienst-Bereitstellungsmodul aufweist:
eine dritte Ressourcen-Zuweisungseinheit (323), die konfiguriert ist, ein Mobiltelefon-UE mittels eines dritten Trägers zu übermitteln, wenn die Anzahl der Mobiltelefon-UEs größer als die Anzahl der Datenkarten-UEs ist und die Differenz zwischen der Anzahl der Mobiltelefon-UEs und der Anzahl der Datenkarten-UEs größer als ein voreingestellter Schwellenwert ist; oder
ein Mobiltelefon-UE mittels des dritten Trägers zu übermitteln, wenn die Anzahl der Datenkarten-UEs größer als die Anzahl der Mobiltelefon-UEs ist und die Differenz zwischen der Anzahl der Datenkarten-UEs und der Anzahl der Mobiltelefon-UEs größer als ein voreingestellter Schwellenwert ist; oder
im Fall eines Mehrfachträgers und wenn die Differenz zwischen der Anzahl der Mobiltelefon-UEs und jener der Datenkarten-UEs kleiner als ein voreingestellter Schwellenwert ist, sowohl ein Mobiltelefon-UE als auch ein Datenkarten-UE mittels des dritten Trägers zu übermitteln.

## Revendications

1. Procédé pour fournir un service différencié à un équipement d'utilisateur, UE, comprenant les étapes suivantes :
obtenir (11) une priorité de RAB d'un UE en fonction d'informations de type, d'informations de classe d'utilisateur et d'informations de type de service de l'UE, et une correspondance prédéfinie entre les informations de type, les informations de classe d'utilisateur et les informations de type de service de l'UE et une priorité de support d'accès radio, RAB, de l'UE, où les informations de type de l'UE comprennent : un UE de type carte de données ou un UE de type téléphone mobile ; et
fournir (12) un service à l'UE en fonction de la priorité de RAB ;
où fournir un service à l'UE en fonction de la priorité de RAB comprend les étapes suivantes :
lorsqu'un réseau comprend une première porteuse et une deuxième porteuse, supporter, par le RNC, un UE de type téléphone mobile sur la première porteuse et supporter un UE de type carte de données sur la deuxième porteuse en fonction d'informations de type obtenues des UE ; et
allouer des ressources aux UE et, de préférence, garantir des ressources requises par un UE avec une priorité de RAB élevée sur la première porteuse ou la deuxième porteuse en fonction de priorités de RAB correspondant aux UE, du nombre total d'UE qui demandent un accès, et des ressources totales disponibles en bande passante d'une cellule ou d'une porteuse où les UE sont situés, où les allocations des ressources au niveau de la première porteuse et de la deuxième porteuse ne s'affectent pas mutuellement.

2. Procédé pour fournir un service différencié à un UE selon la revendication 1, comprenant en outre les étapes suivantes :
obtenir un numéro d'identité internationale d'abonné mobile, IMSI, ou un numéro d'identité internationale d'équipement mobile, IMEI, de l'UE ; et
obtenir les informations de type de l'UE conformément à une planification du numéro IMSI et du numéro IMSI de l'UE ou à une planification du numéro IMEI et du numéro IMEI de l'UE.

3. Procédé pour fournir un service différencié à un UE selon la revendication 1 ou la revendication 2, dans lequel la correspondance prédéfinie entre les informations de type, les informations de classe d'utilisateur et les informations de type de service de l'UE et la priorité de support d'accès radio, RAB, de l'UE comprend une ou une combinaison des priorités suivantes :
une priorité de RAB correspondant à un UE de type carte de données est supérieure à une priorité de RAB correspondant à un UE de type téléphone mobile ;
une priorité de RAB correspondant à un UE avec une classe d'utilisateur élevée est supérieure à une priorité de RAB correspondant à un UE avec une classe d'utilisateur basse ; et
des priorités de RAB correspondant à un UE avec un service de session, un UE avec un service de diffusion continue de médias, un UE avec un service interactif, et un UE avec un service d'arrière-plan sont dans l'ordre décroissant.

4. Procédé pour fournir un service différencié à un UE selon la revendication 1, dans lequel fournir un service à l'UE en fonction de la priorité de RAB comprend en outre les étapes suivantes :
l'UE de type téléphone mobile est supporté sur la première porteuse et l'UE de type carte de données est supporté sur la deuxième porteuse ; et
lorsque la première porteuse est congestionnée, effectuer un transfert de charge depuis la première porteuse vers la deuxième porteuse.

5. Procédé pour fournir un service différencié à un UE selon la revendication 1, dans lequel fournir un service à l'UE en fonction de la priorité de RAB comprend en outre l'étape suivante :
dans le cas de porteuses multiples, lorsque le nombre d'UE de type téléphone mobile est supérieur au nombre d'UE de type carte de données, et lorsque la différence entre le nombre d'UE de type téléphone mobile et le nombre d'UE de type carte de données est supérieure à un seuil prédéfini, supporter, par une troisième porteuse, un UE de type téléphone mobile ; ou
dans le cas de porteuses multiples, lorsque le nombre d'UE de type carte de données est supérieur au nombre d'UE de type téléphone mobile, et lorsque la différence entre le nombre d'UE de type carte de données et le nombre d'UE de type téléphone mobile est supérieure à un seuil prédéfini, supporter, par la troisième porteuse, un UE de type téléphone mobile ; ou
dans le cas de porteuses multiples, lorsque la différence entre le nombre d'UE de type téléphone mobile et le nombre d'UE de type carte de données est inférieure à un seuil prédéfini, supporter, par la troisième porteuse, à la fois un UE de type téléphone mobile et un UE de type carte de données.

6. Appareil pour fournir un service différencié à un équipement d'utilisateur, UE, comprenant :
un module d'obtention de priorité de support d'accès radio, RAB, (31) configuré pour obtenir une priorité de RAB de l'UE en fonction d'informations de type, d'informations de classe d'utilisateur et d'informations de type de service de l'UE, et une correspondance prédéfinie entre les informations de type, les informations de classe d'utilisateur et les informations de type de service de l'UE et une priorité de support d'accès radio, RAB, où les informations de type de l'UE comprennent : un UE de type carte de données ou un UE de type téléphone mobile ; et
un module de délivrance de service (32), configuré pour fournir un service à l'UE en fonction de la priorité de RAB de l'UE obtenue par le module d'obtention de priorité de RAB;
où lorsqu'un réseau comprend une première porteuse et une deuxième porteuse, le module de délivrance de service comprend :
une deuxième unité d'allocation de ressources (322), configurée pour supporter un UE de type téléphone mobile sur la première porteuse et supporter un UE de type carte de données sur la deuxième porteuse en fonction d'informations de type des UE obtenues par le module d'obtention de priorité de RAB ; et
pour allouer des ressources aux UE et, de préférence, garantir les ressources requises par un UE avec une priorité de RAB élevée sur la première porteuse ou la deuxième porteuse en fonction de priorités de RAB des UE, du nombre total d'UE qui demandent un accès, et des ressources totales disponibles en bande passante d'une cellule ou d'une porteuse où les UE sont situés, où les allocations des ressources au niveau de la première porteuse et de la deuxième porteuse ne s'affectent pas mutuellement.

7. Appareil pour fournir un service différencié à un UE selon la revendication 6, dans lequel le module d'obtention de priorité de RAB comprend :
une unité d'obtention de type d'UE (311), configurée pour obtenir un numéro d'identité internationale d'abonné mobile, IMSI, ou un numéro d'identité internationale d'équipement mobile, IMEI, de l'UE, et pour obtenir les informations de type de l'UE conformément à une planification du numéro IMSI d'un opérateur et du numéro IMSI de l'UE ou à une planification du numéro IMEI d'un opérateur et du numéro IMEI de l'UE ; et
une unité de traitement de demande (312), configurée pour interroger une correspondance prédéfinie entre des informations de type, des informations de classe d'utilisateur et des informations de type de service d'un UE et une priorité de RAB conformément aux informations de type, aux informations de classe d'utilisateur et aux informations de type de service de l'UE obtenues par l'unité d'obtention de type d'UE, de manière à obtenir la priorité de RAB de l'UE, où la correspondance comprend une ou une combinaison des priorités suivantes :
une priorité de RAB correspondant à un UE de type carte de données est supérieure à une priorité de RAB correspondant à un UE de type téléphone mobile ;
une priorité de RAB correspondant à un UE avec une classe d'utilisateur élevée est supérieure à une priorité de RAB correspondant à un UE avec une classe d'utilisateur basse ; et
des priorités de RAB correspondant à un UE avec un service de session, un UE avec un service de diffusion continue de médias, un UE avec un service interactif, et un UE avec un service d'arrière-plan sont dans l'ordre décroissant.

8. Appareil pour fournir un service différencié à un UE selon la revendication 6, dans lequel, lorsque le réseau comprend en outre une troisième porteuse, le module de délivrance de service comprend :
une troisième unité d'allocation de ressources (323), configurée pour supporter un UE de type téléphone mobile au moyen d'une troisième porteuse lorsque le nombre d'UE de type téléphone mobile est supérieur au nombre d'UE de type carte de données, et lorsque la différence entre le nombre d'UE de type téléphone mobile et le nombre d'UE de type carte de données est supérieure à un seuil prédéfini ; ou
pour supporter un UE de type téléphone mobile au moyen de la troisième porteuse lorsque le nombre d'UE de type carte de données est supérieur au nombre d'UE de type téléphone mobile, et lorsque la différence entre le nombre d'UE de type carte de données et le nombre d'UE de type téléphone mobile est supérieure à un seuil prédéfini ; ou
pour supporter à la fois un UE de type téléphone mobile et un UE de type carte de données au moyen de la troisième porteuse dans le cas de porteuses multiples, et lorsque la différence entre le nombre d'UE de type téléphone mobile et celui d'UE de type carte de données est inférieure à un seuil prédéfini.
